Europäisches Patentamt

European Patent Office

Office européen des brevets

(19)

(11) Publication number: **0 164 909**
**B1**

(12) **EUROPEAN PATENT SPECIFICATION**

(45) Date of publication of the patent specification:
07.01.88

(51) Int. Cl.⁴: **B 60 N 1/12,** A 47 D 1/00

(21) Application number: 85303363.7

(22) Date of filing: 13.05.85

(54) Child's safety seats.

(30) Priority: 14.05.84 GB 8412240
29.11.84 GB 8430122

(43) Date of publication of application:
18.12.85 Bulletin 85/51

(45) Publication of the grant of the patent:
07.01.88 Bulletin 88/1

(84) Designated Contracting States:
AT BE CH DE FR GB IT LI LU NL SE

(56) References cited:
FR - A - 2 274 490
FR - A - 2 354 898
US - A - 1 915 234
US - A - 2 482 827
US - A - 2 606 328
US - A - 2 629 109
US - A - 2 814 333
US - A - 3 645 548

(73) Proprietor: ASE (UK) LIMITED, Norfolk Street, Carlisle Cumbria CA2 5HX (GB)

(72) Inventor: Anderson, Alexander Barrie, Westwoodside, Wigton Cumbria CA7 9LW (GB)

(74) Representative: Ackroyd, Robert, POLLAK MERCER & TENCH High Holborn House 52-54 High Holborn, London WC1V 6RY (GB)

ACTORUM AG

**Description**

This invention relates to child's safety seats for use in vehicles, for example, motor vehicles.

Known child's safety seats have tended to be rather inversatile and, in particular, not suitable for use by babies and very small children whose body structure cannot withstand loads imparted by a conventional safety harness. Moreover, known seats have tended to be inconvenient to secure in and remove from a vehicle and limited in application to vehicles only.

Examples of known seats are to be found in documents FR-A-2 354 898, US-A-3 645 548 and FR-A-2 274 490. The first of these describes a safety seat in which a seat structure is movable, at constant inclination and with its own backrest facing towards the vehicle seat backrest, along rails provided by a frame placed in contact with a vehicle seat squab. The second document shows a seat in which the seat structure is attached to each of two frame side members at two points only. The last document shows a pram with fold-away wheels intended to allow the pram to be placed on a vehicle seat.

In a first aspect, according to claim 1, the present invention provides a child's safety seat comprising a seat structure, means for supporting the seat structure in a vehicle, and means for securing the safety seat in the vehicle, characterised in that the seat structure, preferably a one-piece shell, is mountable on the support means in first and second alternative positions in which the seat structure is in forwardly- and rearwardly-facing positions.

In the forwardly-facing position a child occupying the seat faces generally away from the backrest of the vehicle seat whilst, in the rearwardly-facing position, the child faces generally towards the backrest.

The rearwardly-facing position is preferably a reclined position and, in such a position, the back of the head of a child occupying the seat is supported by the seat structure.

The safety seat is thus adaptable and can be used for a child throughout a growing-up period. The seat is advantageous in that the support means can be left permanently installed in a vehicle and the seat structure mounted on it when required.

In a second aspect, according to claim 3, the invention provides a child's safety seat comprising a seat structure, means for supporting the seat structure in a vehicle, and means for securing the safety seat in the vehicle, the support means being shaped such that, when the safety seat is secured in the vehicle, first and second spaced-apart end portions of the support means contact respectively a seat of the vehicle and the vehicle floor adjacent the seat, the seat structure being movably mounted on an intermediate portion of the support means which lies between the end portions, characterised in that the intermediate portion of the support means is shaped such that, when the safety seat is secured in a vehicle, the position of the seat structure, which is preferably a one-piece shell, relative to the support means is selectively adjustable by movement along the intermediate portion between positions which include a reclined position and a more upright position.

Advantageously, the seat structure is mountable on the support means intermediate portion in first and second alternative positions in which the seat structure is in forwardly- and rearwardly-facing positions.

The combination of a reclined and a rearwardly-facing position is particularly advantageous since, in this position, a baby or very small child (for example one weighing less than 20 lb or 9 kg) can safety occupy the seat structure which can be reclined sufficiently to form a cradle-like support for the baby or child. In the event of a sudden acceleration or deceleration of the vehicle in which the safety seat is secured, the resulting loads on the baby's or child's body act on its back which is the strongest part of the body of very small children. The present invention can thus provide a seat to be used to carry babies and very small children whose body structures are incapable of resisting crash loads imparted through a safety harness such as is suitable for larger children, for whom the seat of the invention can be fitted with a safety harness and preferably used with the seat structure in a forward-facing position relative to the support means. Accordingly, the invention provides a safety seat which can be used for a child throughout its growing-up from a baby onwards.

Advantageously, when the safety seat is secured in a vehicle, the support means intermediate portion is inclined upwardly in the direction towards the second end portion, preferably on a curved path, so that the first end portion of the support means contacts the vehicle seat backrest at a location spaced upwardly from the join of the vehicle seat squab and backrest. This shape of the support means also helps to ensure stability of the safety seat in the event of an accident and reduces the risk of tipping movement of the safety seat taking place. Moreover, such a shape can provide a more upright position which is a raised position, in which a child in the seat can easily see out of a vehicle, and a lower, more reclined position suited to a sleepy or sleeping child.

Preferably, the seat structure is movable along the intermediate portion on wheels or other rotary elements which are rotatably-mounted on the seat structure.

Conveniently, the seat has means which allow engagement of the seat structure with the support means at a selected one of a plurality of predetermined positions.

The support means of the child's safety seat conveniently comprise first and second laterally-spaced side members engageable with respective opposite sides of the seat structure and joined by one or more transverse members. The ends of the side members constituting the end portion of the support means contacting the vehicle floor advantageously have respective adjustable elements to facilitate securing of the safety seat in a range of vehicles and on a range of vehicle seats.

The end portion of the support means which contacts the vehicle floor advantageously comprises energy-absorbing elements which absorb loads on the child's seat in the event of an impact of or upon the vehicle. These energy-absorbing elements may be combined with or be constituted by the adjustable elements mentioned above.

When the support means comprises the spaced side members mentioned above, the engagement means are conveniently constituted by a respective series of spaced apertures on each side member, the seat structure having a spring-loaded bolt at each side for reception in a selected aperture in the adjacent side member.

The securing means of the safety seat preferably comprise an anchoring strap or assembly of straps positioned at each side of the support means for securement to the vehicle in a region adjacent the joint of the vehicle seat squab and backrest. Thus, the anchoring straps or strap assemblies can be secured to the seat belt anchorages conventionally provided in the said regions of the front and back seats of motor vehicles.

In a further aspect, according to claim 12, the present invention provides a child's safety seat comprising a seat structure, means for supporting the seat structure in a vehicle, means for securing the safety seat in a vehicle, handle means and a plurality of rotary elements positioned to allow use of the seat as a pram, characterised by means for removable attachment of the rotary elements, which preferably comprise wheels, to the support means or seat structure and, preferably, also by means for removable attachment of the handle means to the support means or seat structure, which preferably comprises a one-piece shell.

Thus, formation of a pram may take place by removable attachment of wheels to the support means or, otherwise, by removable attachment of wheels to the seat structure. In this latter case, the attachment means may comprise further frame means removably attachable to the seat structure.

The safety seat may also include handle means, preferably arranged for removable attachment to the support means or seat structure, to facilitate pushing, pulling and steering of the seat when in use as a pram.

Advantageously, the child's safety seat of the first or second aspect of the present invention is capable of adaption into a child's pram and, for this purpose, that child's safety seat invention may have a plurality of rotary elements preferably comprising wheels, having means for removable attachment to the support means for conversion of the safety seat into a pram and, preferably also by handle means for removable attachment to the support means.

Preferably, first and second attachment means of the rotary elements are removably attachable to the support means adjacent the first and second end portions thereof to provide, respectively, rear and front rotary elements of the pram.

Advantageously, the first attachment means comprise respective lateral struts each extending downwardly from the first end portion to the rear rotary element(s) and upwardly from the first end portion to handle means of the pram.

The wheels are conveniently castors but other wheels or rotary elements may also be used.

When the safety seat of the invention is used as a pram, the seat structure may be mounted on the support means in either a forward-facing position or a rearward-facing position.

In a further aspect, according to claim 16, of the present invention, there is provided a child's safety seat comprising a seat structure, preferably a one-piece shell, a support frame for supporting the seat structure in a vehicle, the support frame comprising first and second spaced-apart side portions on which the seat structure is supported for movement between an upright and an inclined position, means for securing the safety seat in the vehicle, and means for securing the seat structure to the frame at a selected relative position of the structure and frame, the seat structure having two attachment points only with each frame side portion, characterised in that the securing means comprise at least one guide element and associated securing element, the guide element being positioned on the seat structure and having a bore in which a frame side portion is slidably received and the securing element having a stem which is receivable in a selected one of a plurality of apertures in the frame side portion and can be inserted into and secured in a socket opening laterally into the bore in such a way that the stem is received in an aperture aligned with the socket and the seat structure is thus secured to the frame.

With such an arrangement, the seat structure is particularly easily moved relative to the frame and, unlike a seat in which the seat structure is attached to each frame side portion at several points or over a continuous contact region, the ease of adjustability of the seat structure is not impaired by departures of the shape of the frame from its original or ideal shape.

Advantageously, each frame side portion has a lower, preferably rectilinear, forwardly- and downwardly-inclined ramp portion and an upper, preferably rectilinear, upright portion, each attachment point lying on a different one of the lower and upper frame portions.

Thus, in its uppermost position, the upper region of the seat structure is at the upper end of the upright guide portion and the lower region is at its lower end, or at the upper end of the inclined portion. Downward movement of the seat structure upper region is accompanied by movement, of the lower region guided by the inclined guide portion, both forwardly and downwardly, so that as the seat structure tilts into a reclining position, it is also lowered as a whole.

In preferred embodiments, each frame side portion has upper and loper free ends, the upper free end preferably forming the free end of a looped portion for reception over the upper edge of a vehicle seat backrest and the lower free end preferably forming a free end of a side frame portion intended for contact with a vehicle seat squab and extending beneath a respective one of the ramp portions.

Thus, the invention can provide safety seats having frames which are particularly simple to construct and economical in use of materials.

Embodiments of the invention will now be described by way of example with reference to the drawings, in which:

Figure 1 is a side view of a support frame of a first child's safety seat secured on a vehicle seat,

Figures 2 to 4 are views similar to Figure 1 showing a seat structure mounted on the support frame in three different positions,

Figure 5 is a front view of the support frame of Figure 1,

Figure 6 is a sectional view of part of the seat structure and support frame of Figures 1 to 5,

Figure 7 is a side view of the child's safety seat of Figures 1 to 6 adapted for use as a pram,

Figures 8, 9 and 10 are side views of a second child's safety seat, each Figure showing the seat in a different position; and

Figures 11 and 12 are exploded perspective views on a larger scale of upper and lower connectors respectively included in the child's safety seat of Figures 8 to 10.

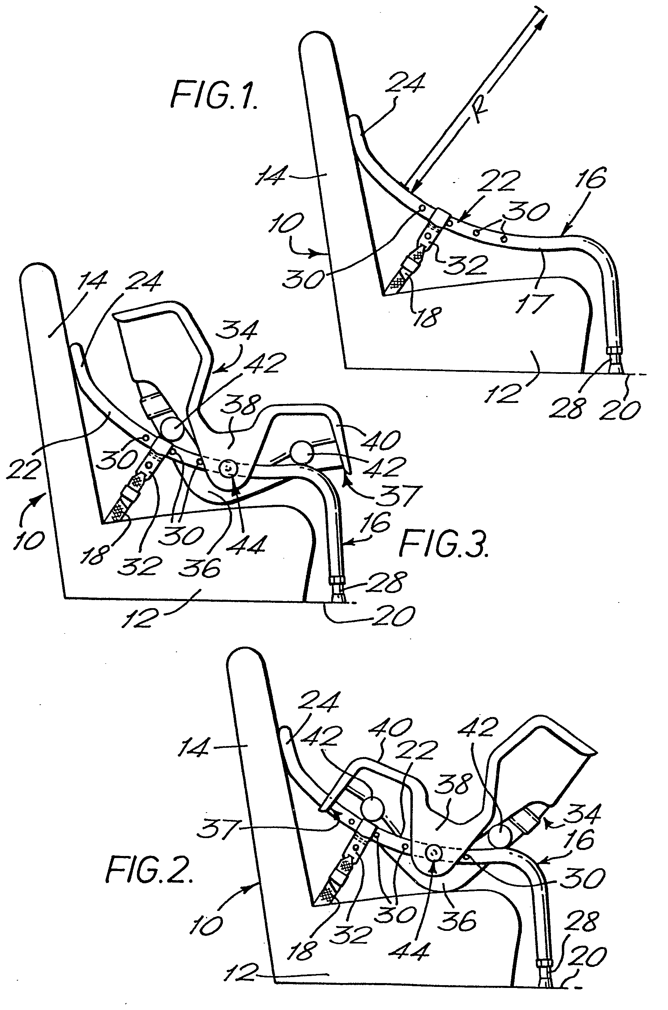

Figure 1 of the drawings shows a vehicle seat 10 having a squab 12 and a backrest 14. A support frame 16 of a child's safety seat is secured to the vehicle seat by a pair of anchoring straps 18 connected to conventional safety belt anchorages (not shown) of the vehicle in the region of the joint of the squab 12 and backrest 14 of the seat 10.

In a modified embodiment, each strap 18 is replaced by a pair of straps extending to the region of the join of the squab 12 and backrest 10 from spaced points on the support frame 16. The straps of each pair may be connected to a further strap extending to the respective vehicle anchorage, or may extend independently to their vehicle anchorage.

The support frame 16 has first and second tubular side members 17 each having a lower portion extending upwardly from the vehicle floor 20 in front of the seat 10, then upwardly and rearwardly by way of an intermediate portion 22 to an upper end portion 24 where an upper cross member 26 (see Figure 5) joins the two side members 17 together. A lower cross member 27 (see Figure 5) extends between the side members 17 adjacent the upper ends of their lower portions. The lower ends of the side members 17 each have an adjustable foot 28 which is slidable within the respective side member 17 and can be adjusted so that the intermediate portion 22 is spaced above the squab 12 of the vehicle seat 10 and the upper end portions 24 and cross member 24 contact the seat backrest 14 when the anchoring straps are tensioned and adjusted in length by conventional devices (not shown).

Each adjustable foot 28 may be secured to its side member 17 by a lock nut engaging a tapered external screw thread on an end portion of the side members 17. The end portion also has an axial slot which is open at the end of the side member and is narrowed by rotation of the lock nut to cause the side member 17 to grip the foot 28 in a selected relative position of the side member and the foot.

The intermediate portion 22 of each side member 17 is formed as an arc of a circle of radius R and each has a series of holes 30 spaced along its length, the holes in the respective intermediate portions being aligned transversely. The anchoring straps 18 are secured to the intermediate portions 22 of the side members by suitable brackets 32.

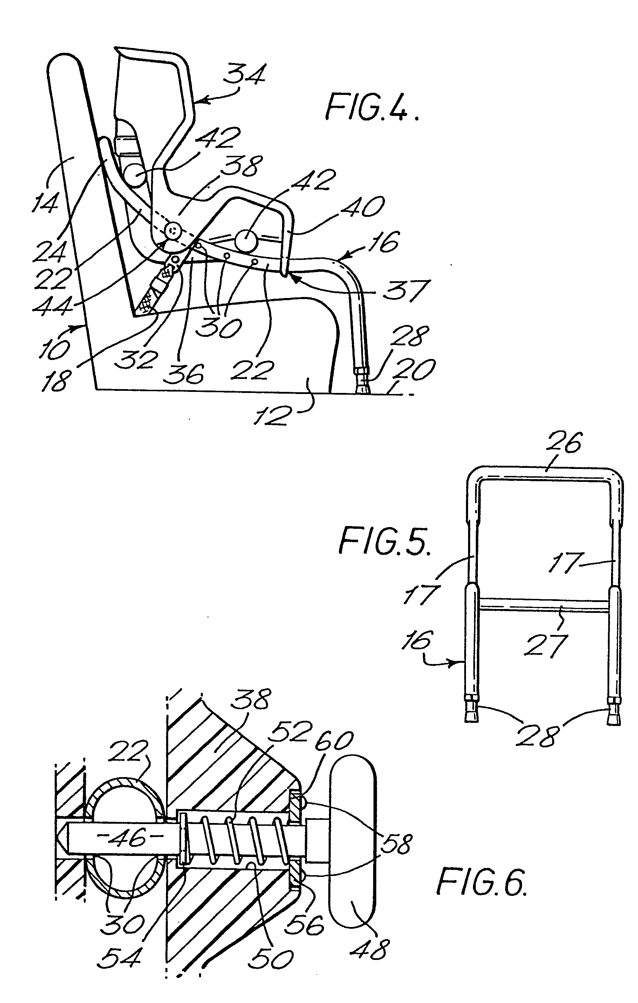

Figure 2 shows a seat structure in the form of a one piece shell 34 mounted in a rearward-facing position on the support frame 16. The shell 34 is moulded from a suitable plastics material and is fitted with a removable safety harness (not shown). The side members 17 of the support frame 16 are located between side walls 36 and flap portions 38 of the shell which extend parallel to the side walls 36 and are spaced therefrom. At the forward edge of the squab of the shell 34, a notch 37 in a outwardly turned lip 40 of the shell 34 can also receive the side members 17 (see Figures 2 and 4). The shell 34 is movable along the curved intermediate portions 22 of the support frame 26 on two pairs of wheels 42, one pair being attached to each side of the shell 34. Each flap portion 38 is fitted with a spring-loaded locking bolt assembly 44 which is described in more detail below and includes a bolt 46 which can be received in a selected one of the holes 30 when the shell 34 is in a selected position in the support frame 16.

Figures 3 and 4 show the shell 34 on the support frame 16 in two further positions in which the child's safety seat structure faces forwards and is in two different states of inclination relative to the support frame 16.

Figure 6 shows one of the spring loaded bolt assemblies 44 of the shell 34 in more detail. The bolt 46 is shown received in an aperture 30 in the intermediate portion 22 of a side member 17 of the support frame 16. The outer end of the bolt 46 is secured to an operating knob 48 and is slidable in an aperture 50 in the flap portion 38 of the shell 34.

A helical compression spring 52 surrounds the bolt 46 and acts between a circlip 54, located in a circumferential groove on the bolt 46, and a plate 56 apertured centrally for the bolt 46 and secured by screws 58 in a recess 60 of the flap 38. An aperture 62 in the side wall 36 of the shell 34 is aligned with the aperture 50 in the flap 38 and receives the end of the bolt 46 passing through the aperture 30 in the tubular intermediate portion 22 of the side member 17.

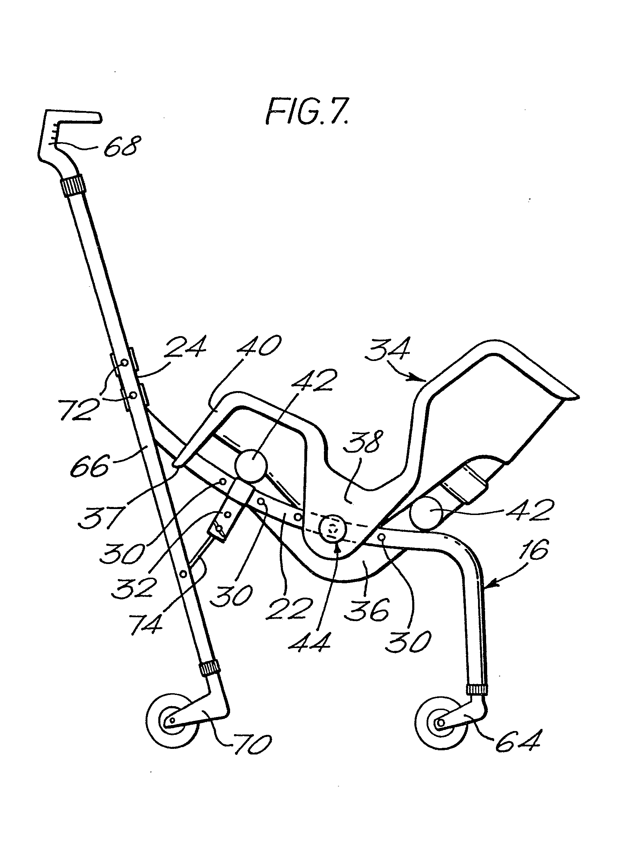

Figure 7 of the drawings shows the child's seat adapted for use as a pram. The adjustable feet 28 have been removed from the lower ends of the side members 17 of the support frame 16 and have been replaced by castors 64. The upper end portion 24 of each side member of the support frame 16 is secured to a tubular handle and wheel strut member 66 which extends upwardly from the upper end portion 24 of the respective side member 17 to a handle 68 and downwardly from the upper end portion 24 to a further castor 70. The tubular members 66 are detachably secured to the side members 17 by fasteners such as bolts and wing nuts 72. In Figure 7, the anchoring straps 18 have been removed from the brackets 32 and additional braces 74 pivotally attached to the tubular members 66 have been attached to the brackets 32. The pram can be used for transportation of a baby or child in the usual manner with the shell 34 mounted on the support frame 16 in either a rearward-facing position as shown in Figures 2 and 7 or a forward-facing position such as one of those shown in Figures 3 and 4. In the rearward-facing orientation, the shell can adopt a cradle-like position suitable for a baby or small child.

In a modified embodiment, the four castors 64, 70 are replaced by a front pair of wheels and a rear pair of wheels, each pair being mounted at opposite ends of an axle which carries a pair of mounting members which are insertable into the lower ends of the side members 17 and the lower ends of the strut members 66. The mounting members may be secured by tapered thread and lock nut arrangements as described above, or, for example, by ball catches on the mounting members engageable in apertures in the side or strut members 17, 66.

By way of further modification, each castor 64 or 70 is replaced by a pair of coaxially-arranged wheels mounted one to each of the respective side or strut member 17 or 66.

For use in a motor vehicle, the support frame 16 of the child's safety seat is first mounted on a seat 10 of the vehicle as shown in Figure 1. The adjustable feet 28 are adjusted until the intermediate portion is spaced from the squab 12 of the vehicle seat 10 and the anchoring straps 18 secured to the vehicle anchorage points and tensioned and adjusted in length. The shell 34 is then mounted on the support frame 16 in either a rearward-facing position such as is shown in Figure 2 or in a forward-facing position such as is shown in Figures 3 and 4. For adjustment of the inclination of the shell 34, the shell 34 moves on its wheels 42 along the intermediate portions 22 of the support frame 16 until the shell 34 is in its desired orientation. The spring-loaded locking bolts 44 are then located in the appropriate apertures 30 in the support frame 16. For mounting of the shell 34 in a forwardly facing position, the knobs 48 of the locking bolts 44 are pulled outwardly against the bias of the springs 52 and the shell 34 lifted clear of the support frame 16. The shell may then be rotated and replaced on the support frame 16 in a position such as that shown in Figure 3 or Figure 4. In this case, the locking bolts 46 again engage the apertures 30 in the intermediate portions 22 of the side members 17 of the support frame 16. When the shell 34 is in a forward-facing position, the safety harness can be fitted to the shell 34 to secure the child therein.

The support frame 16 may be left attached to the vehicle after removal of the shell 34, or alternatively, the support frame 16 can be removed by freeing of the anchoring straps 18. After removal, the seat can be used as a pram as shown in Figure 7. For this purpose, the tubular members 66 are secured to the upper end portions 24 of the side members 17 of the support frame 16 by means of the bolts and wing nuts 72 and the braces 74 attached to the brackets 32. The adjustable feet 28 are removed from the lower ends of the side members 17 and replaced by the castors 64. The shell 34 is then mounted on the intermediate portions 22 of the side members 17 of the support frame 16 in a rearward-facing position such as is shown in Figure 7 or in a forward-facing position such as one of those shown in Figures 3 and 4. In each position, adjustment of the orientation of the shell 34 is possible by operation of the locking bolts 44.

In another modification of the embodiment described above, the handles 68 are permanently attached to the upper end portion 24 of the support frame 16 and orientated so as not to interfere with the contact between the backrest 14 of the vehicle seat 10 and the support frame 16.

It will now be seen that the present invention can provide a versatile child's safety seat which can be used in a rearward-facing position for transportation of babies or very small children in a vehicle and, when fitted with a safety harness, can be used by larger children in a forward-facing position. The seat can thus be used for babies and children over a wide age range from infancy onwards. The seat structure is rapidly and easily removable from the support frame which may be left anchored in a vehicle, or, alternatively, the support frame and seat structure can be removed for conversion into a pram. When secured in the vehicle, the support frame uses two conventional safety belt anchorages and, in hatchback vehicles and estate cars, anchoring straps passing inconveniently over the back of the rear seat are avoided.

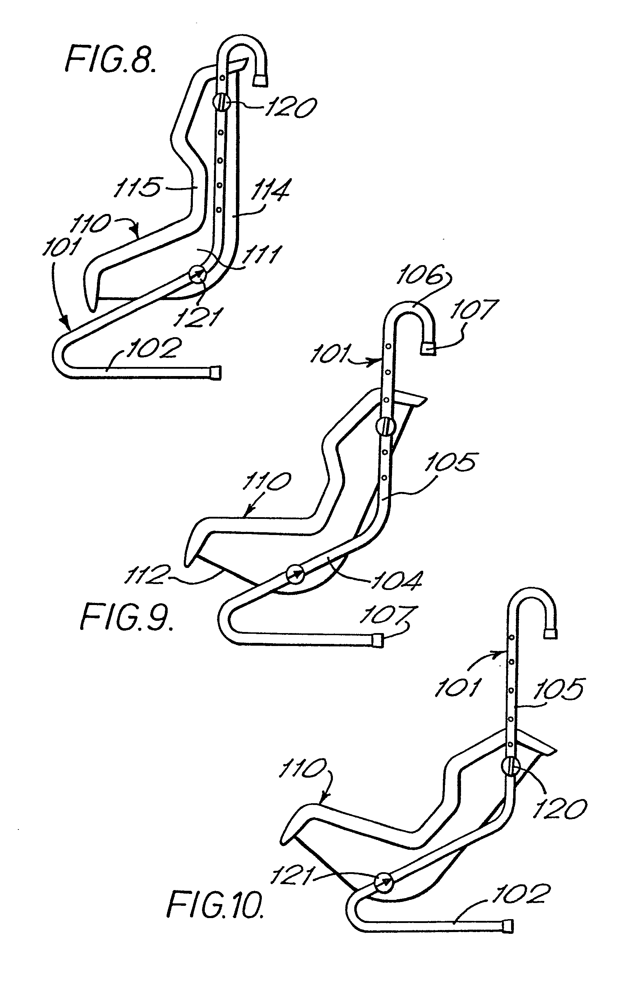

The child's safety seat shown in Figures 8 to 10 comprises a support frame 101 by means of which the safety seat can be secured to a vehicle seat in use. The support frame 101 comprises a pair of spaced tubular side members of circular cross-section each having a straight base portion 102 which extends fore and aft in use on the squab of the vehicle seat and which is joined at its forward end through a curved intermediate portion with a straight rearwardly extending ramp portion 104 making an angle of some 25 or 30° with the base portion. Above the rear end of the base portion 102, the ramp portion 104 joins by way of a second short curved intermediate portion with an upright portion 105 having at the upper end thereof a portion 106 curved rearwardly through 180° to provide a hook which can be received over the backrest of the vehicle seat. The two side members 102 are rigidly connected together by transversely extending cross members (not shown), located on the base and hooked end portions only. The free ends of the side members are closed by caps 107, for example of plastics material.

It will be understood that the frame of the child's safety seat can be configured so as to be secured to the rear of the seat in ways other than described. Any frame structure can be employed which can be securely received in place and which provides spaced side members with ramp and upright portions generally in the positions illustrated.

Between the frame side members there is received a seat structure 110 in the form of a shell with side walls 111, base and rear walls 112, 114 providing respectively seat and backrest surfaces within the shell, and an outwardly and downwardly turned rim 115. The shell can be integrally moulded from a suitable plastics material and is fitted with a removable safety harness (not shown). The seat structure 110 is connected to the frame 101 by upper and lower connectors 102 and 121 located on each side wall 111 respectively in the region of the upper end and adjacent the join of base and rear walls 112, 114.

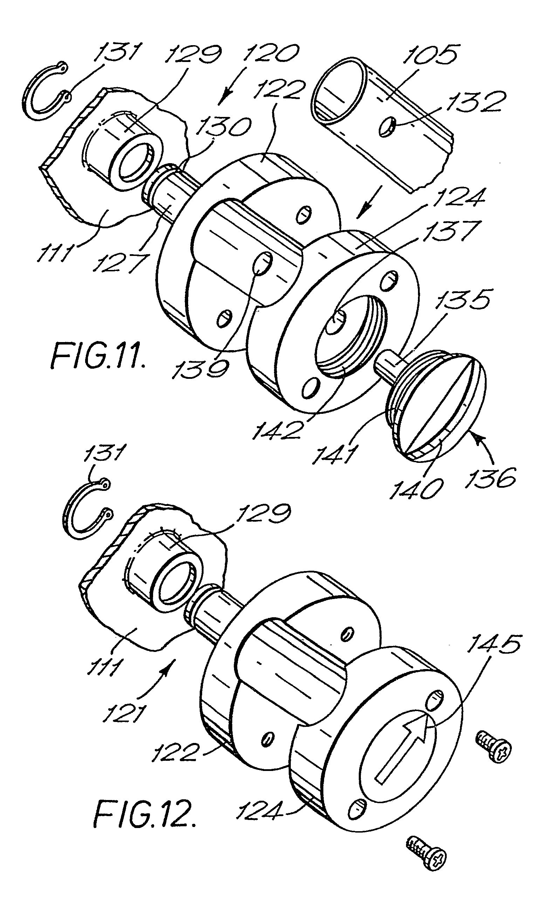

As shown in Figure 11 each upper connector 120 comprises inner and outer discs 122, 124 formed with opposed diametrical grooves of semi-circular cross-section within which the side member upright portion 105 is slidably received. The inner and outer discs 122, 124 are secured together by bolts (not shown) extending through holes in the outer disc into tapped recesses in the inner disc.

A shaft portion 127 extends axially from the inner disc 122 through an aperture in the seat structure side wall 111 defined by an integrally formed outwardly extending bush portion 129 of a length sufficient to space the upright portion 105 away from the rim 115 of the seat structure. The free end of the shaft portion 127 provided with a peripheral groove 130 at a position inwardly of the seat structure side wall and the connector 120 is freely rotatably retained in place by a circlip 131 received in this groove.

The side member upright portion 105 is provided with a series of spaced apertures 132 extending transversely therethrough, and the connector 120 is secured to the upright portion at the position of any selected one of these apertures by the shank 135 of a securement pin 136 which is received in a bore 137 in the outer disc 124 and an aligned recess 139 in the inner disc 122. The securement pin has a head provided with a transverse ridge 140 to facilitate manipulation and with an external screw thread 141, preferably of the quick start type, which can engage with an internal screw thread 142 formed in a central recess at the outer side of the outer disc 124.

The connector 120 could be modified by replacement of the securement pin 136 by a spring-loaded plunger. The seat structure 110 can in fact be connected to the frame 101 by a variety of means other than the connectors described. For example, each frame side member can be frictionally gripped by a manually operated clamp, so that infinite adjustability is obtained, and the clamping or securement means need not necessarily be associated with the means by which the frame and the seat structure are slidably connected.

The connectors 121 connecting the seat structure to the inclined or ramp portions 104 of the frame side members 101 closely resemble the connectors 120, as will appear from Figure 12, and corresponding parts are indicated by the same reference numerals. The connectors 121 are secured to the side walls 111 in the same way as the connectors 120 but merely make a rotatable slide fit on the ramp portions 104 and have no securement means corresponding to the pin 136. The outer face of the outer disc 124 is provided with a marking 145, in the form of an arrow in the embodiment shown, to indicate that this fitting is a slide fitting and does not require to be manupulated when the position of the seat structure is to be changed. The axial bore 137 and the recess 139 of the inner and outer discs 122, 124 can be omitted but to save the manufacture of separate parts, the connector 121 can be identical to the connector 120 except that the securement pin 136 is replaced by a screw-threaded plug carrying the marking 145.

Returning to Figure 8, this shows the child's seat in its extreme upright position, in which the seat surface of the seat structure 110 is approximately horizontal, or parallel to the base portions 102 of the frame side members, and the backrest surface is approximately vertical, or parallel to the side member upright portions. The seat surface is spaced substantially above the base portions 102, so that a child occupying the seat is placed fairly high in the vehicle and can see outside it through the adjacent windows.

When it is desired to tilt the seat structure into a more reclined position, for example that of Figure 9, the upper connectors 120 are manually released and are moved downwardly on the upright portions 105 until the securement pins can enter through a lower one of the holes 132, corresponding to a desired inclination of the seat structure seat and back surfaces. The lower connectors slide forwardly and downwardly on the ramp portions 104, the seat structure being automatically lowered.

The process can be carried further to the extreme reclined position shown in Figure 10 in which the seat structure seat and back surface are making approximately equal angles of inclination to the horizontal, and the seat structure is at its lowest position, providing greater comfort for the occupant and facilitating placement and removal by an adult.

It will be noted that the precise shape of the frame side members 101, because the seat structure 110 is attached to each side member at two points only, is not critical for satisfactory ease of adjustment of the seat structure. Manufacturing tolerances can therefore be easily accommodated and small distortions occuring in use are not detrimental.

It will also be evident that the invention can be embodied in a variety of ways other than as described with reference to and illustrated in the drawings, provided they are comprised within the scope of the attached claims.

### Claims

1. A child's safety seat comprising a seat structure (34), means (16) for supporting the seat structure in a vehicle, and means (18) for securing the safety seat in the vehicle, characterised in that the seat structure, preferably a one-piece shell, is mountable on the support means in first and second alternative positions in which the seat structure is in forwardly- and rearwardly-facing positions.

2. A child's safety seat according to claim 1, characterised in that the rearwardly-facing position is a reclined position.

3. A child's safety seat comprising a seat structure (34), means (16) for supporting the seat structure in a vehicle, and means (18) for securing the safety seat in the vehicle, the support means being shaped such that, when the safety seat is secured in the vehicle, first and second spaced-apart end portions (24, 28) of the support means contact respectively a seat (10) of the vehicle and the vehicle floor adjacent the seat, the seat structure being movable mounted on an intermediate portion (22) of the support means which lies between the end portions, characterised in that the intermediate portion (22) of the support means (16) is shaped such that, when the safety seat (10) is secured in a vehicle, the position of the seat structure (34), which is preferably a one-piece shell, relative to the support means is selectively adjustable by movement along the intermediate portion between positions which include a reclined position and a more upright position.

4. A child's safety seat according to claim 3, characterised in that, when the safety seat (10) is secured in a vehicle the support means intermediate portion is inclined upwardly in the direction towards the first end portion, preferably on a curved path, so that the first end portion (24) of the support means contacts the vehicle seat backrest (14) at a location spaced upwardly from the join of the vehicle seat squab and backrest.

5. A child's safety seat according to claim 3 or 4, characterised in that the seat structure (34) is movable on rotary elements (42) which are mounted on the seat structure and preferably comprise wheels.

6. A child's safety seat according to any of claims 3 to 5, characterised by seat structure securing means (30, 44) which allow for securing of the seat structure (34) at a selected one of a plurality of predetermined relative positions of the seat structure and the support means (16).

7. A child's safety seat according to any of claims 3 to 6, characterised in that seat structure (34) is mountable on the support means intermediate portion in first and second alternative positions in which the seat structure is in forwardly- and rearwardly-facing positions.

8. A child's safety seat according to any preceding claim, characterised in that the support means comprise first and second laterally-spaced side members (17) which are engageable with respective opposite sides of the seat structure (34) and which are joined by one or more transverse members (26, 27).

9. A child's safety seat according to claim 8 when dependent on claim 6, characterised in that the seat structure securing means comprise a respective spring-loaded bolt (46) at each side of the seat structure (34), the bolts being receivable in a selected pair of a series of pairs of apertures (30), the apertures of each pair being in respective different side members (17).

10. A child's safety seat according to claim 8 or 9, characterised in that each side member (17) has at one of its ends a member (28) which is adjustably extensible from the side member, the adjustable members constituting the second support means end portion.

11. A child's safety seat according to any of claims 8 to 10, characterised in that the side members (17) have adjacent their ends constituting the second support means end portion respective energy-absorbing elements.

12. A child's safety seat comprising a seat structure (34), means (16) for supporting the seat structure in a vehicle, means (18) for securing the safety seat in a vehicle, handle means (68) and a plurality of rotary elements (64, 70) positioned to allow use of the seat as a pram, characterised by means (66, 72, 74) for removable attachment of the rotary elements, which preferably comprise wheels, to the support means or seat structure and, preferably, also by means for removable attachment of the handle means to the support means or seat structure, which preferably comprises a one-piece shell.

13. A child's safety seat according to any of claims 1 to 11, characterised by a plurality of rotary elements (64, 70), preferably comprising wheels, having means (66, 72, 74) for removable attachment to the support means (16) for conversion of the safety seat into a pram and, preferably, also by handle means (68) for removable attachment to the support means.

14. A child's safety seat according to claim 13, characterised in that first (66) and second attachment means of the rotary elements are removably attachable to the support means (16) adjacent the first and second end portions (24, 28) thereof to provide, respectively, rear (64) and front (70) rotary elements of the pram.

15. A child's safety seat according to claim 14, characterised in that the first attachment means comprise respective lateral struts (66) each extending downwardly from the first end portion (24) of the rear rotary element(s) (64) and upwardly from the first end portion to handle means (68) of the pram.

16. A child's safety seat comprising a seat structure, preferably a one-piece shell (110), a support frame (101) for supporting the seat structure in a vehicle, the support frame comprising first and second spaced-apart side portions (102, 104, 105) on which the seat structure is supported for movement between an upright and an inclined position, means for securing the safety seat in the vehicle, and means (120) for securing the seat structure of the frame at a selected relative position of the structure and frame, the seat structure having two attachment points only (120, 121) with each frame side portion, characterised in that the securing means comprise at least one guide element and associated securing element, the guide element being positioned on the seat structure (110) and having a bore in which a frame side portion (105) is slidably received and the securing element (136) having a stem (135) which is receivable in a selected one of a plurality of apertures (132) in the frame side portion and can be inserted into and secured in a socket (137, 139) opening laterally into the bore in such a way that the stem is received in an aperture aligned with the socket and the seat structure is thus secured to the frame.

17. A child's safety seat according to claim 16, characterised in that the securing means are located at at least one (120) of the attachment points.

18. A child's safety seat according to claim 16 or 17, characterised in that each frame side portion has a lower, preferably rectilinear, forwardly- and downwardly-inclined ramp portion (104) and an upper, preferably rectilinear, upright portion (105), each attachment point lying on a different one of the lower and upper frame portions.

19. A child's safety seat according to claim 18, characterised in that each frame side portion has upper and lower free ends (107), the upper free end preferably forming the free end of a looped portion (106) for reception over the upper edge of a vehicle seat backrest and the lower free end preferably forming a free end of a side frame portion (102) intended for contact with a vehicle seat squab and extending beneath a respective one of the ramp portions.

**Patentansprüche**

1. Kindersicherheitssitz mit einem Sitzbauteil (34), einer Einrichtung (16) zum Halten des Sitzbauteils in einem Fahrzeug und einer Einrichtung (18) zum Befestigen des Sicherheitssitzes im Fahrzeug, dadurch gekennzeichnet, dass das Sitzbauteil, vorzugsweise ein einteiliger Schalenkörper, an der Halteeinrichtung in einer ersten und einer zweiten alternativen Lage anbringbar ist, in der sich das Sitzbauteil in einer nach vorne und nach hinten gewandten Lage befindet.

2. Kindersicherheitssitz nach Anspruch 1, dadurch gekennzeichnet, dass die nach hinten gewandte Lage eine zurückgelehnte Lage ist.

3. Kindersicherheitssitz mit einem Sitzbauteil (34), einer Einrichtung (16) zum Halten des Sitzbauteils in einem Fahrzeug und einer Einrichtung (18) zum Befestigen des Sicherheitssitzes im Fahrzeug, wobei die Halteeinrichtung so geformt ist, dass dann, wenn der Sicherheitssitz im Fahrzeug befestigt ist, ein erster und ein zweiter beabstandeter Endteil (24, 28) der Halteeinrichtung jeweils mit einem Sitz (10) des Fahrzeuges und mit dem Fahrzeugboden neben dem Sitz in Berührung stehen, und das Sitzbauteil bewegbar an einem Zwischenteil (22) der Halteeinrichtung angebracht ist, der zwischen den Endteilen liegt, dadurch gekennzeichnet, dass der Zwischenteil der Halteeinrichtung (16) so geformt ist, dass dann, wenn der Sicherheitssitz (10) in einem Fahrzeug befestigt ist, die Lage des Sitzbauteils (34), das vorzugsweise ein einteiliger Schalenkörper ist, relativ zur Halteeinrichtung wahlweise über eine Bewegung entlang des Zwischenteils zwischen Lagen einstellbar ist, die eine zurückgelehnte Lage und eine mehr aufrechte Lage einschliessen.

4. Kindersicherheitssitz nach Anspruch 3, dadurch gekennzeichnet, dass dann, wenn der Sicherheitssitz (10) in einem Fahrzeug befestigt ist, der Zwischenteil der Halteeinrichtung schräg nach oben in Richtung auf den ersten Endteil, vorzugsweise auf einem gekrümmten Weg, verläuft, so dass der erste Endteil (24) der Halteeinrichtung mit der Rücklehne (14) des Fahrzeugsitzes an einer Stelle im Abstand oberhalb der Verbindungsstelle zwischen dem Fahrzeugsitzpolster und der Rücklehne in Berührung steht.

5. Kindersicherheitssitz nach Anspruch 3 oder 4, dadurch gekennzeichnet, dass das Sitzbauteil (34) auf Drehelementen (42) bewegbar ist, die am Sitzbauteil angebracht sind und vorzugsweise Räder umfassen.

6. Kindersicherheitssitz nach einem der Ansprüche 3 bis 5, gekennzeichnet durch das Sitzbauteil befestigende Einrichtungen (30, 44), die eine Befestigung des Sitzbauteils (34) in einer gewählten Lage aus einer Vielzahl von bestimmten relativen Lagen des Sitzbauteils und der Halteeinrichtung (16) erlauben.

7. Kindersicherheitssitz nach einem der Ansprüche 3 bis 6, dadurch gekennzeichnet, dass das Sitzbauteil (34) am Zwischenteil der Halteeinrichtung in einer ersten und einer zweiten alternativen Lage anbringbar ist, in der das Sitzbauteil sich in einer nach vorne und in einer nach hinten gewandten Lage befindet.

8. Kindersicherheitssitz nach einem der vorhergehenden Ansprüche, dadurch gekennzeichnet, dass die Halteeinrichtung ein erstes und ein zweites seitlich beabstandetes Seitenelement (17) umfasst, die mit den jeweils gegenüberliegenden Seiten des Sitzbauteils (34) in Eingriff kommen können und die über ein oder mehrere Querelemente (26, 27) verbunden sind.

9. Kindersicherheitssitz nach Anspruch 8, und dieser nach Anspruch 6, dadurch gekennzeichnet, dass die Befestigungseinrichtung für das Sitzbauteil einen jeweiligen federbeaufschlagten Bolzen (46) auf jeder Seite des Sitzbauteils (34) umfasst, wobei die Bolzen in einem gewählten Paar einer Reihe von Paaren von Öffnungen (30) aufnehmbar sind und die Öffnungen jedes Paares sich in jeweils verschiedenen Seitenelementen (17) befinden.

10. Kindersicherheitssitz nach Anspruch 8 oder 9, dadurch gekennzeichnet, dass jedes Seitenelement (17) an einem seiner Enden ein Element (28) aufweist, das verstellbar vom Seitenelement vorziehbar ist, wobei die verstellbaren Elemente den zweiten Endteil der Halteeinrichtung bilden.

11. Kindersicherheitssitz nach einem der Ansprüche 8 bis 10, dadurch gekennzeichnet, dass die Seitenelemente (17) neben ihren den zweiten Endteil der Halteeinrichtung bildenden Enden jeweils Energie absorbierende Elemente aufweisen.

12. Kindersicherheitssitz mit einem Sitzbauteil (34), einer Einrichtung (16) zum Halten des Sitzbauteils in einem Fahrzeug, einer Einrichtung (18) zum Befestigen des Sicherheitssitzes in einem Fahrzeug, einer Handgriffeinrichtung (68) und einer Vielzahl von Drehelementen (64, 70), die so angeordnet sind, dass der Sitz als Kinderwagen benutzt werden kann, gekennzeichnet durch Einrichtungen (66, 72, 74) zum abnehmbaren Anbringen der Drehelemente, die vorzugsweise Räder umfassen, an der Halteeinrichtung oder dem Sitzbauteil und vorzugsweise gleichfalls durch Einrichtungen zum abnehmbaren Anbringen der Handgriffeinrichtung an der Halteeinrichtung oder dem Sitzbauteil, das vorzugsweise einen einteiligen Schalenkörper umfasst.

13. Kindersicherheitssitz nach einem der Ansprüche 1 bis 11, gekennzeichnet durch eine Vielzahl von Drehelementen (64, 70), die vorzugsweise Räder umfassen und Einrichtungen (66, 72, 74) zum abnehmbaren Anbringen an der Halteeinrichtung aufweisen, um den Sicherheitssitz in einen Kinderwagen umzuwandeln, und vorzugsweise gleichfalls durch eine Handgriffeinrichtung (68) zum abnehmbaren Anbringen an der Halteeinrichtung.

14. Kindersicherheitssitz nach Anspruch 13, dadurch gekennzeichnet, dass die erste (66) und die zweite Anbringungseinrichtung der Drehelemente abnehmbar an der Halteeinrichtung (16) neben ihrem ersten und ihrem zweiten Endteil (24, 28) anbringbar sind, um jeweils die hinteren (64) und vorderen (70) Drehelemente des Kinderwagens zu liefern.

15. Kindersicherheitssitz nach Anspruch 14, dadurch gekennzeichnet, dass die erste Anbringungseinrichtung jeweils seitliche Streben (66) umfasst, von denen jede vom ersten Endteil (24) zu dem hinteren Drehelement oder den hinteren Drehelementen (64) und vom ersten Endteil zur Handgriffeinrichtung (68) des Kinderwagens nach oben verläuft.

16. Kindersicherheitssitz mit einem Sitzbauteil, vorzugsweise einem einteiligen Schalenkörper (110), einem Halterahmen (101) zum Halten des Sitzbauteils in einem Fahrzeug, wobei der Halterahmen einen ersten und einen zweiten beabstandeten Seitenteil (102, 104, 105) umfasst, an denen das Sitzbauteil zwischen einer aufrechten und einer geneigten Lage bewegbar gehalten ist, Einrichtungen zum Befestigen des Sicherheitssitzes in einem Fahrzeug und Einrichtungen (120) zum Befestigen des Sitzbauteils am Rahmen in einer gewählten relativen Lage des Bauteils und des Rahmens, wobei das Sitzbauteil nur zwei Anbringungspunkte (120, 121) an jedem Rahmenseitenteil aufweist, dadurch gekennzeichnet, dass die Befestigungseinrichtungen wenigstens ein Führungselement und ein zugehöriges Befestigungselement umfassen, wobei das Führungselement am Sitzbauteil (110) angeordnet ist und eine Bohrung aufweist, in der ein Rahmenseitenteil (105) gleitend verschiebbar aufgenommen ist, und das Befestigungselement (136) einen Schaft (135) aufweist, der in einer gewählten Öffnung aus einer Vielzahl von Öffnungen (132) im Rahmenseitenteil aufnehmbar ist und in einen Sockel (137, 139) eingeführt und darin befestigt werden kann, der seitlich in die Bohrung so mündet, dass der Schaft in einer mit dem Sockel ausgerichteten Öffnung aufgenommen, und das Sitzbauteil in dieser Weise am Rahmen befestigt ist.

17. Kindersicherheitssitz nach Anspruch 16, dadurch gekennzeichnet, dass die Befestigungseinrichtungen an wenigstens einem (120) der Anbringungspunkte angeordnet sind.

18. Kindersicherheitssitz nach Anspruch 16 oder 17, dadurch gekennzeichnet, dass jeder Rahmenseitenteil einen unteren, vorzugsweise geradlinigen, nach vorne und nach unten schräg verlaufenden Schrägteil (104) und einen oberen, vorzugsweise geradlinigen, aufrechten Teil (105) aufweist, wobei jeder Anbringungspunkt an einem anderen Teil des unteren und oberen Rahmenteils liegt.

19. Kindersicherheitssitz nach Anspruch 18, dadurch gekennzeichnet, dass jeder Rahmenseitenteil ein oberes und ein unteres freies Ende (107) aufweist, wobei das obere freie Ende vorzugsweise das freie Ende eines umgebogenen Teils (106) zur Aufnahme über dem oberen Rand der Rücklehne eines Fahrzeugsitzes bildet, und das untere freie Ende vorzugsweise ein freies Ende eines Seitenrahmenteils (102) bildet, das dazu bestimmt ist, mit dem Sitzkissen eines Fahrzeugsitzes in Berührung zu kommen, und unterhalb eines der jeweiligen Schrägteile verläuft.

**Revendications**

1. Siège de sécurité pour enfant, comprenant une structure de siège (34), un moyen (16) de support de la structure du siège dans un véhicule, et un moyen (18) de fixation de la structure de siège dans le véhicule, caractérisé en ce que la structure de siège, de préférence une coquille monobloc, peut être montée sur le moyen de support dans une première et une seconde position possibles dans lesquelles la structure de siège se trouve dans des positions où elle fait face à l'avant ou à l'arrière.

2. Siège de sécurité pour enfant selon la revendication 1, caractérisé en ce que la position face à l'arrière est une position inclinée.

3. Siège de sécurité pour enfant comprenant une structure de siège (34), un moyen (16) de support de la structure de siège dans un véhicule, et un moyen (18) de fixation de la structure de siège dans un véhicule, le moyen de support étant conformé de telle sorte que, lorsque le siège de sécurité est fixé dans le véhicule, des première et seconde parties terminales espacées (24, 28) du moyen de support reposent respectivement sur une siège du véhicule et sur le plancher du véhicule près du siège, la structure de siège étant montée de façon mobile sur une partie intermédiaire (22) du moyen de support qui se trouve entre les parties terminales, caractérisé en ce que la partie intermédiaire (22) du moyen de support (16) est conformée de telle sorte que, lorsque le siège de sécurité (10) est fixé dans un véhicule, la position de la structure de siège (34), qui est de préférence une coquille monobloc, par rapport au moyen de support est réglable sélectivement par mouvement le long de la partie intermédiaire entre des positions qui comprennent une position inclinée et une position plus verticale.

4. Siège de sécurité pour enfant selon la revendication 3, caractérisé en ce que, lorsque le siège de sécurité (10) est fixé dans un véhicule, la partie intermédiaire du moyen de support est inclinée vers le haut en direction de la première partie terminale, de préférence selon une trajectoire courbe, de sorte que la première partie terminale (24) du moyen de support repose sur le dossier (14) du siège du véhicule à un endroit espacé vers le haut par rapport à la jonction du coussin et du dossier du siège du véhicule.

5. Siège de sécurité pour enfant selon la revendication 3 ou 4, caractérisé en ce que la structure de siège (34) est mobile sur des éléments rotatifs (42) qui sont montés sur la structure de siège et comprennent de préférence des roues.

6. Siège de sécurité pour enfant selon l'une quelconque des revendications 3 à 5, caractérisé par des moyens (30, 44) de fixation de la structure de siège qui permettent la fixation de la structure de siège (34) à une position choisie parmi plusieurs positions relatives prédéterminées de la structure de siège et du moyen de support (16).

7. Siège de sécurité pour enfant selon l'une quelconque des revendications 3 à 6, caractérisé en ce que la structure de siège (34) peut être montée sur la partie intermédiaire du moyen de support dans une première et une seconde positions possibles dans lesquelles la structure de siège se trouve dans des positions où elle fait face à l'avant ou à l'arrière.

8. Siège de sécurité pour enfant selon l'une quelconque des revendications précédentes, caractérisé en ce que le moyen de support comprend des premier et second éléments latéraux expacés (17) qui peuvent coopérer avec les côtés opposés correspondants de la structure de siège (34) et qui sont réunis par un ou plusieurs éléments transversaux (26, 27).

9. Siège de sécurité pour enfant selon la revendication 8 quand elle dépend de la revendication 6, caractérisé en ce que le moyen de fixation de la structure de siège comprend un boulon à ressort (46) de chaque côté de la structure de siège (34), les boulons étant logeables dans une paire choisie d'une série de paires d'ouvertures (30), les ouvertures de chaque paire se trouvant respectivement dans des éléments latéraux (17) différents.

10. Siège de sécurité pour enfant selon la revendication 8 ou 9, caractérisé en ce que chaque élément latéral (17) comporte à l'une de ses extrémités un élément (28) qui est extensible de façon réglable à partir de l'élément latéral, les éléments extensibles constituant la seconde partie terminale du moyen de support.

11. Siège de sécurité pour enfant selon l'une quelconque des revendications 8 à 10, caractérisé en ce que les éléments latéraux (17) ont respectivement près de leurs extrémités constituant la seconde partie terminale du moyen de support des éléments absorbant l'énergie.

12. Siège de sécurité pour enfant comprenant une structure de siège (34), un moyen (16) de support de la structure de siège dans un véhicule, un moyen (18) de fixation du siège de sécurité dans un véhicule, un moyen formant poignée (68) et plusieurs éléments rotatifs (64, 70) placés de façon à permettre l'utilisation du siège comme poussette, caractérisé par des moyens (66, 72, 74) permettant la fixation amovible des éléments rotatifs, qui comportent de préférence des roues, au moyen de support ou à la structure de siège, et également, de préférence, par des moyens permettant la fixation amovible du moyen formant poignée au moyen de support ou à la structure de siège, qui est de préférence une coquille monobloc.

13. Siège de sécurité pour enfant selon l'une quelconque des revendications 1 à 11, caractérisé par plusieurs éléments rotatifs (64, 70), qui sont de préférence des roues, comportant des moyens (66, 72, 74) pour une fixation amovible au moyen de support (16) en vue de transformer le siège de sécurité en poussette, et également, de préférence, par un moyen formant poignée (68) pour une fixation amovible au moyen de support.

14. Siège de sécurité pour enfant selon la revendication 13, caractérisé en ce que les premier (66) et second moyens de fixation des éléments rotatifs peuvent s'attacher de façon amovible au moyen de support (16) près de ses première et seconde parties terminales (24, 28) pour constituer respectivement les éléments rotatifs arrière (64) et avant (70) de la poussette.

15. Siège de sécurité pour enfant selon la revendication 14, caractérisé en ce que le premier moyen de fixation comprend respectivement des montants latéraux (66), chacun se prolongeant vers le bas depuis la première partie terminale (24) jusqu'à le ou les éléments rotatifs arrière (64) et vers le haut depuis la première partie terminale jusqu'au moyen formant poignée (68) de la poussette.

16. Siège de sécurité pour enfant comprenant une structure de siège, de préférence une coquille monobloc (110), un châssis (101) destiné à servir de support à la structure de siège dans un véhicule, le châssis de support comprenant des première et seconde parties latérales expacées (102, 104, 105) sur lesquelles la structure de siège est portée pour permettre un mouvement entre une position verticale et une position inclinée, un moyen de fixation de la structure de siège dans un véhicule, et des moyens (120) de fixation de la structure de siège au châssis dans une position relative choisie de la structure et du châssis, la structure de siège n'ayant que deux points d'attachement (120, 121) sur chaque partie latérale du châssis, caractérisé en ce que les moyens de fixation comprennent au moins un organe de guidage et un organe de fixation associé, l'organe de guidage étant situé sur la structure de siège (110) et comportant un trou dans lequel vient se placer à glissement une partie latérale (105) du châssis, et l'organe de fixation (136) comportant une tige (135) qui peut se placer dans celle choisie d'une série d'ouvertures (132) pratiquées dans la partie latérale du châssis et peut être insérée dans — et y être bloquée — un orifice (137, 139) s'ouvrant latéralement dans le trou de telle façon que la tige est logée dans une ouverture alignée avec l'orifice, la structure de siège étant ainsi fixée au châssis.

17. Siège de sécurité pour enfant selon la revendication 16, caractérisé en ce que les moyens de fixation sont situés à au moins un (120) des points d'attachement.

18. Siège de sécurité pour enfant selon la revendication 16 ou 17, caractérisé en ce que chaque partie latérale du châssis a une partie formant rampe (104) inclinée vers l'avant et vers le bas, de préférence rectiligne, inférieure et une partie (105) verticale, de préférence rectiligne, supérieure, chaque point d'attachement se trouvant sur une différente des parties de châssis inférieure et supérieure.

19. Siège de sécurité pour enfant selon la revendication 18, caractérisé en ce que chaque partie latérale du châssis a des extrémités libres (107) supérieure et inférieure, l'extrémité libre supérieure formant de préférence l'extrémité libre d'une portion recourbée (106) destinée à venir se placer sur le rebord supérieur d'un dossier de siège de véhicule, et l'extrémité libre inférieure formant de préférence l'extrémité libre d'une partie de châssis latérale (102) destinée à venir en contact avec un coussin de siège de véhicule et se prolongeant au-delà de la partie formant rampe correspondante.

FIG.1.

FIG.3.

FIG.2.

FIG.4.

FIG.5.

FIG.6.

FIG.7.

FIG.8.

*120*

*115* *114*

*110*
*101*
*111*

*121*

*102*

*106*

*107*

*101*

*110*

*105*

*112* *104*

FIG.9. *107*

*101* *105*

*110*

*120*

*121*

*102*

FIG.10.

FIG.11.

FIG.12.